(19) Europäisches Patentamt European Patent Office Office européen des brevets

(11) **EP 4 535 295 A1**

(12) **EUROPEAN PATENT APPLICATION**
published in accordance with Art. 153(4) EPC

(43) Date of publication:
09.04.2025 Bulletin 2025/15

(21) Application number: 24826848.4

(22) Date of filing: 29.03.2024

(51) International Patent Classification (IPC):
*G06V 10/74* (2022.01)

(86) International application number:
PCT/CN2024/084929

(87) International publication number:
WO 2025/015968 (23.01.2025 Gazette 2025/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.07.2023 CN 202310881851

(71) Applicant: Huizhou Desay SV Intelligent
Transportation
Technological Institute Co., Ltd
Huizhou, Guangdong 516006 (CN)

(72) Inventors:
• NIE, Donglin
 Guangdong 516000 (CN)
• PENG, Dengfu
 Guangdong 516000 (CN)
• JIA, Nan
 Guangdong 516000 (CN)

(74) Representative: karo IP
Patentanwälte PartG mbB
Steinstraße 16-18
40212 Düsseldorf (DE)

(54) **TARGET TRACKING METHOD AND APPARATUS BASED ON IMAGE SPACE POSITIONING, AND DEVICE**

(57)     The present application provides an object tracking method and apparatus based on image space positioning, and a device. The method includes: acquiring first position coordinates of a plurality of object detection boxes at a current moment; predicting second position coordinates of a candidate box of each object detection box at the next moment on the basis of the first position coordinates; calculating multi-dimensional similarities between each object detection box and the plurality of candidate boxes on the basis of the second position coordinates and third position coordinates of the object detection box at the next moment, the multi-dimensional similarities including a multi-dimensional similarity determined on the basis of a dynamic threshold of a centroid distance; and outputting an object tracking result at the next moment by using a preset matching algorithm according to the multi-dimensional similarities. The position of an object in the world space is considered, the problem of inaccurate positioning caused by single position information of a 2D image is effectively solved, and the object positioning accuracy of multi-object overlapping can be improved by utilizing the difference in centroid distances between a far object and a near object in continuous imaging.

FIG. 1

**Description**

TECHNICAL FIELD

The present application relates to the field of computer vision, and more particularly, to an object tracking method and apparatus, a device and a storage medium.

BACKGROUND

An object tracking algorithm facilitates identifying anomalous behaviors and potential hazards in automotive processes, and assisting autonomous vehicles in making more accurate decisions. At present, the main steps of the object tracking algorithm include: taking a position of an object detection box in a 2D image as an input, and outputting a position of a predicted detection box of the current object in the next frame through deep learning object detection, Kalman prediction and Hungary matching. However, the 2D image cannot cover far object tracking and near object tracking in the real world due to single position change information. Moreover, for complex road test scenes, such as parking lots or pedestrian crossings, a very large number of objects overlap greatly on a 2D imaging plane of the images, so matching errors are very easy to occur during matching, and the accuracy of object tracking results cannot be guaranteed.

SUMMARY OF THE INVENTION

In order to solve the above technical problems, the present application provides an object tracking method and apparatus based on image space positioning, and a device.

According to a first aspect, the present invention provides an object tracking method based on image space positioning, including: acquiring first position coordinates of a plurality of object detection boxes at a current moment, the first position coordinates including first pixel coordinates and first world coordinates; predicting second position coordinates of a candidate box of each object detection box at the next moment on the basis of the first position coordinates; calculating multi-dimensional similarities between each object detection box and a plurality of candidate boxes on the basis of the second position coordinates and third position coordinates of the object detection box at the next moment, the multi-dimensional similarities including a multi-dimensional similarity determined on the basis of a dynamic threshold of a centroid distance, and the third position coordinates being actual measured position coordinates; and outputting an object tracking result at the next moment by using a preset matching algorithm according to the multi-dimensional similarities.

In some implementations according to the first aspect, the calculating multi-dimensional similarities between each object detection box and the plurality of candidate boxes on the basis of the second position coordinates and third position coordinates of each object detection box at the next moment includes: screening, for each object detection box, at least one target candidate box corresponding to the object detection box from the plurality of candidate boxes by using a preset dynamic threshold of a centroid distance; and calculating a multi-dimensional similarity between each object detection box and the target candidate box on the basis of the second position coordinates and the third position coordinates.

In some implementations according to the first aspect, the screening, for each object detection box, at least one target candidate box corresponding to the object detection box from the plurality of candidate boxes by using the preset dynamic threshold of the centroid distance includes: calculating a first centroid distance between each object detection box and an object tracking device, and second centroid distances between each object detection box and the plurality of candidate boxes, on the basis of first centroid world coordinates of the object detection box and second centroid pixel coordinates of the candidate boxes; determining a dynamic threshold corresponding to the first centroid distance on the basis of a preset dynamic threshold table of centroid distances.

The preset dynamic threshold table of the centroid distances further includes: performing information annotation on historical training data, and calculating a centroid distance for each pair of annotated object detection boxes; counting the distribution of the centroid distances, and dividing similarity thresholds to generate the dynamic threshold table of the centroid distances; and dynamically validating and tuning the dynamic threshold table of the centroid distances according to the object detection box acquired each time.

For each object detection box, target candidate boxes having a second centroid distance from the object detection box being greater than the dynamic threshold are screened, each object detection box corresponding to at least one of the target candidate boxes.

In some implementations according to the first aspect, the calculating the multi-dimensional similarity between each object detection box and the target candidate box on the basis of the second position coordinates and the third position coordinates includes: calculating a detection box centroid offset similarity between each object detection box and the target candidate box on the basis of third centroid pixel coordinates of the object detection box and second centroid pixel coordinates of the candidate boxes; calculating a detection box shape change similarity and a detection box area similarity between each object detection box and the target candidate box on the basis of third frame pixel coordinates of the object detection box and second frame pixel coordinates of the candidate; and calculating a world coordinate offset similarity between each object detection box and the target candidate box on the basis of third world coordinates of the object detection box and second world coordinates of the candidate boxes. The calculating the multi-dimensional similarity between each object detection box and the target candidate box further includes: performing calculation by using a multi-dimensional similarity weighting model, wherein the multi-dimensional similarity weighting model at least includes a distance measurement algorithm, an edge feature matching algorithm and a structural similarity index algorithm; and weighting, for each object detection box, the detection box centroid offset similarity, the detection box shape change similarity, the detection box area similarity and the world coordinate offset similarity to obtain the multi-dimensional similarity.

In some implementations according to the first aspect, the acquiring the first position coordinates of the plurality of object detection boxes at the current moment includes: acquiring first pixel coordinates of the plurality of object detection boxes at the current moment; generating, for each object detection box, object grounding point coordinates of the object detection box on the basis of the first pixel coordinates; and calculating space coordinates of the object grounding point coordinates in a world space on the basis of calibrated intrinsic parameters and calibrated extrinsic parameters of the object tracking device, wherein the space coordinates are first world coordinates of the object detection boxes at the current moment.

The detecting the plurality of object detection boxes includes: performing distortion correction on an image acquired by the object tracking device, performing object detection on the corrected image to generate the object detection boxes, and correcting the object detection boxes, wherein a deep learning algorithm is used for processing in the process of performing object detection on the corrected image.

In some implementations according to the first aspect, the predicting the second position coordinates of the candidate box of each object detection box at the next moment on the basis of the first position coordinates includes: predicting, for each object detection box, the second position coordinates of the candidate box of the object detection box at the next moment by using a Kalman filtering algorithm according to the first position coordinates of the object detection box at the current moment and fourth position coordinates at the previous moment. The Kalman filtering algorithm further includes: tuning parameters of a state transition matrix and process noise according to motion data of the object detection box; and inputting the first position coordinates and the fourth position coordinates into a preset motion model for candidate box prediction at the next moment according to the tuned parameters, wherein the preset motion model adopts any one of a uniform velocity model, a random acceleration model, a steering model or a nonlinear module.

In some implementations according to the first aspect, the outputting the object tracking result at the next moment by using the preset matching algorithm according to the multi-dimensional similarities includes: matching a final target candidate box corresponding to each object detection box at the next moment by using a Hungary matching algorithm according to the multi-dimensional similarities between each object detection box and the plurality of candidate boxes; and outputting the final target candidate box as the object tracking result.

According to a second aspect, the present invention provides an object tracking apparatus based on image space positioning, including: an acquisition module, configured to acquire first position coordinates of a plurality of object detection boxes at a current moment, the first position coordinates including first pixel coordinates and first world coordinates; a prediction module, configured to predict second position coordinates of a candidate box of each object detection box at the next moment on the basis of the first position coordinates; a calculation module, configured to calculate multi-dimensional similarities between each object detection box and a plurality of candidate boxes on the basis of the second position coordinates and third position coordinates of each object detection box at the next moment, the multi-dimensional similarities including a multi-dimensional similarity determined on the basis of a dynamic threshold of a centroid distance, and the third position coordinates being actual measured position coordinates; and an outputting module, configured to output an object tracking result at the next moment by using a preset matching algorithm according to the multi-dimensional similarities.

In a third aspect, the present application further provides a computer device, including a processor and a memory, the memory being configured to store a computer program therein, and the computer program being executed by the processor to implement the object tracking method based on image space positioning according to the first aspect.

According to a fourth aspect, the present application further provides a computer-readable storage medium which is configured to store a computer program therein, the computer program being executed by a processor to implement the object tracking method based on image space positioning according to the first aspect.

Compared with the prior art, the present application at least has the following technical effects. By acquiring the first position coordinates of the plurality of object detection boxes at the current moment, the first position coordinates including first pixel coordinates and first world coordinates, the position of an object in the world space is comprehensively considered, and the problem of single position change features of a 2D image is effectively solved, thereby effectively tracking a far object and a near object in the real world while effectively improving the object tracking accuracy with respect to a multi-object overlapping problem in the 2D image under a complex scene. The second position coordinates of the candidate box of each object detection box at the next moment are predicted on the basis of the first position coordinates, so as to improve the object positioning accuracy in combination with object position prediction, thereby solving the problem of positioning inaccuracy caused by single position information based on the 2D image. The multi-dimensional similarities between each object detection box and the plurality of candidate boxes are calculated on the basis of the second position coordinates and the third position coordinates of the object detection box at the next moment, the multi-dimensional similarities including a multi-dimensional similarity determined on the basis of the dynamic threshold of the centroid distance. The object tracking result at the next moment is output by using the preset matching algorithm according to the multi-dimensional similarities, such that the object positioning accuracy of multi-object overlapping can be improved by taking advantage of the difference in centroid distances between the far object and the near object and between a small object and a large object in 2D continuous imaging.

BRIEF DESCRIPTION OF THE DRAWINGS

FIG. 1 is a flowchart of an object tracking method based on image space positioning shown in an embodiment of the present application.

FIG. 2 is a schematic diagram of a relationship of dynamic thresholds of centroid distances shown in an embodiment of the present application.

FIG. 3 is a schematic structural diagram of an object tracking apparatus based on image space positioning shown in an embodiment of the present application.

FIG. 4 is a schematic structural diagram of a computer device shown in an embodiment of the present application.

DETAILED DESCRIPTION OF THE INVENTION

The technical solutions in the embodiments of the present application will be described clearly and completely below in conjunction with accompanying drawings of the present application. Of course, the described embodiments are merely some embodiments, rather than all embodiments, of the present application. Based on the examples of the present application, all other examples derived by a person of ordinary skill in the art without creative efforts shall fall within the protection scope of the present application.

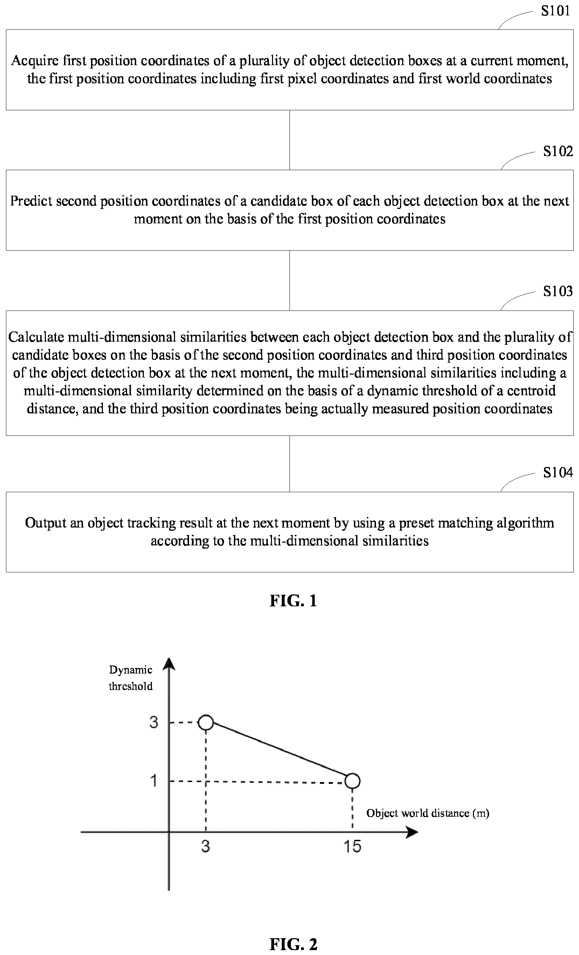

Referring to FIG. 1, FIG. 1 is a flowchart of an object tracking method based on image space positioning shown in an embodiment of the present application. The object tracking method based on image space positioning in the embodiment of the present application may be applied to a computer device. The computer device includes, but is not limited to, a vehicle-mounted terminal, a smart phone, a laptop computer, a tablet computer, a desktop computer, a physical server, a cloud server, and other devices. The computer device is provided with or is externally connected with an object tracking device (e.g., a camera). As shown in FIG. 1, the object tracking method based on image space positioning in the present embodiment includes step S101 to step S104, which are described in detail as follows.

Step S101: acquire first position coordinates of a plurality of object detection boxes at a current moment, the first position coordinates including first pixel coordinates and first world coordinates.

In this step, each object detection box is an object bounding box obtained by performing bounding box detection on a 2D image collected by an object tracking device. Optionally, the bounding box detection may be implemented on the basis of an instance segmentation algorithm, and will not be repeated here. Preferably, the object tracking device is a surround-view fisheye camera.

The first position coordinates as a position coordinate set of the object detection box are actual measured values at the current moment, including but not limited to centroid pixel coordinates depicting the center of the object detection box, boundary pixel coordinates depicting the boundary of the object detection box, centroid world coordinates depicting the center of the object detection box in the world space, and boundary world coordinates depicting the boundary of the object detection box. Optionally, the pixel coordinates may be obtained at the time of bounding box detection; world coordinates may be obtained by transforming pixel coordinates according to a coordinate relationship (e.g., intrinsic parameters and extrinsic parameters of the camera) between the image and the world space.

In some embodiments, the step S101 includes: acquiring first pixel coordinates of the plurality of object detection boxes at the current moment; generating, for each object detection box, object grounding point coordinates of the object detection box on the basis of the first pixel coordinates; and calculating space coordinates of the object grounding point coordinates in a world space on the basis of calibrated intrinsic parameters and calibrated extrinsic parameters of the object tracking device, wherein the space coordinates are first world coordinates of the object detection boxes at the current moment.

The detecting the plurality of object detection boxes includes: performing distortion correction on an image acquired by the object tracking device to eliminate a possible distortion in the image, thereby ensuring the accuracy of subsequent object detection. The distortion correction may be used to resample pixels using interpolation methods such as bilinear interpolation or bicubic interpolation. Pixel coordinates may be adjusted using a distortion correction formula for a radial distortion. Additional parameters may be used to perform correction for a tangential distortion.

The corrected image is subjected to object detection to generate object detection boxes which are then corrected. The correction process includes, but is not limited to the following aspects: multi-dimensional similarity match: the multi-dimensional similarity evaluation method as previously described is used to match object detection boxes between adjacent frames, thereby correcting the positions and shapes of the detection boxes.

Post-processing technology: the post-processing technology may be used to further optimize the object detection boxes, e.g., non-maximum suppression (NMS) to eliminate overlapping boxes, bounding box regression to finely tune the positions of the boxes, etc.

Object tracking: motion information of an object in consecutive frames is used to optimize the positions of the detection boxes in combination with the object tracking algorithm, thereby improving the stability and continuity of detection.

Shape adjustment: the shape of the detection box is further adjusted according to shape characteristics of the object, thereby outlining the contour of the object more accurately.

The corrected object detection result is evaluated, and indicators such as intersection over union (IoU) may also be used to evaluate the accuracy and coverage of the detection box. According to the evaluation result, the entire detection system may be optimized, including adjusting parameters of an object detection model, optimizing a post-processing algorithm, adjusting a multi-dimensional similarity weight, etc.

Deep learning algorithms, such as Faster R-CNN, YOLO, and SSD, are used for processing in the process of performing object detection on the corrected image, but not limited herein.

In the present embodiment, an object grounding point is used to represent a position of the object in the world space. Exemplarily, the deep learning algorithm is used to identify a name of the object detection box and pixel coordinates of the object detection box (including coordinates x and y of a vertex in the upper left corner, as well as a length w and width h of the object detection box) in the current frame image; and an object grounding point $P(Px, Py)$ is generated equivalently on the basis of the pixel coordinates $(x, y, w, h)$ of the object detection box. Optionally, $Px=(x+w\times1/2)$, $Py=y+h$, that is, the bottom midpoint of the object detection box is used as the object grounding point.

Through calibration parameters such as intrinsic parameters and extrinsic parameters of the object tracking device, world coordinate values of this point P in the world space are calculated to represent the position of the object in the world space. Optionally, the object tracking device is a surround-view fisheye camera, and then the object grounding point P is fisheye diagram coordinates, so the fisheye map is converted into a distortion correction image, and the corresponding pixel coordinate point of the object grounding point P in the distortion correction image is found, wherein the distortion correction image is actually a pinhole camera model, and world coordinates of the point P may be obtained based on a small hole imaging principle. A calculation formula may be:

$$Zc\begin{bmatrix} u \\ v \\ 1 \end{bmatrix} = \begin{bmatrix} \frac{1}{d_x} & 0 & u_0 \\ 0 & \frac{1}{d_y} & v_0 \\ 0 & 0 & 1 \end{bmatrix} \begin{bmatrix} f & 0 & 0 & 0 \\ 0 & f & 0 & 0 \\ 0 & 0 & 1 & 0 \end{bmatrix} \begin{bmatrix} R & t \\ 0_{1*3} & 1 \end{bmatrix} \begin{bmatrix} X_w \\ Y_w \\ Z_w \\ 1 \end{bmatrix};$$

in which: $(u,v)$ are pixel coordinates of the object grounding point; $Z_c$ is a constant; first and second matrices on the right side of the equation may be combined into a camera intrinsic parameter matrix; the third matrix is a camera extrinsic parameter matrix; and $(X_w, Y_w, Z_w)$ are world coordinates of the object grounding point.

Step S102: predict second position coordinates of a candidate box of each object detection box at the next moment on the basis of the first position coordinates.

In this step, the second position coordinates are estimated values at the next moment. Because there may be an error between a position of the object detection box obtained by the bounding box detection and an actual position, if the bounding box detection is carried out on each frame image, a cumulative error will continue to increase. Therefore, in the present embodiment, second position coordinates of the object detection box in the next candidate box are predicted through a motion model, and a detection error is corrected and the cumulative error is reduced by means of position prediction.

In some embodiments, the step S102 includes: predicting, for each object detection box, second position coordinates of the candidate box of the object detection box at the next moment by using a Kalman filtering algorithm according to the first position coordinates of the object detection box at the current moment and fourth position coordinates at the previous moment. The Kalman filtering algorithm further includes: tuning parameters of a state transition matrix and process noise according to motion data of the object detection box; and inputting the first position coordinates and the fourth position coordinates into a preset motion model according to the tuned parameters, for candidate box prediction at the next moment, wherein the preset motion model adopts any one of a uniform velocity model, a random acceleration model, a steering model or a nonlinear module.

In the present embodiment, the Kalman filtering algorithm can perform prediction on the basis of an actual measured value (i.e., a position of the object detection box obtained by the bounding box detection algorithm) and an estimated value (i.e., a position of the object detection box estimated by an operational model), so as to effectively reduce a cumulative error in the object tracking process and an estimation error of the motion model. It should be noted that the Kalman filtering algorithm may use a known algorithm, which will not be repeated herein.

In step S103: calculate multi-dimensional similarities between each object detection box and a plurality of candidate boxes on the basis of the second position coordinates and third position coordinates of the object detection box at the next moment, the multi-dimensional similarities including a multi-dimensional similarity determined on the basis of a dynamic threshold of a centroid distance.

In this step, the third position coordinates are actual measured values at the next moment. The multi-dimensional similarity is a weighting result of the similarities calculated under a plurality of dimensions. The similarities of the plurality of dimensions include, but are not limited to, a detection box centroid offset similarity, a detection box shape change similarity, a detection box area similarity, and a world coordinate offset similarity. The detection box centroid offset similarity is a centroid offset similarity between the object detection box and the candidate box. The detection box shape change similarity is a shape change similarity between the object detection box and the candidate box. The detection box area similarity is an area similarity between the object detection box and the candidate box. The world coordinate offset similarity is a world coordinate offset similarity between the object detection box and the candidate box. Optionally, the second position coordinates and the third position coordinates are both coordinate sets. The corresponding similarity may be calculated on the basis of the corresponding coordinate values representing the centroid, shape, area, and world coordinates in the second position coordinates and the third position coordinates. A similarity calculation formula may adopt a cosine distance similarity, a Euclidean distance similarity, or a Manhattan distance similarity, etc., which will not be repeated herein.

The dynamic threshold of the centroid distance is determined to screen the target candidate box, and the target candidate box is used for a process of multi-dimensional similarity calculation. It should be noted that there is an obvious difference between a centroid distance of a far object and a centroid distance of a near object or between a centroid distance of a large object and a centroid center of a small object in two consecutive frames. For example, a centroid distance between a far object a of the current frame image A and a far object b of the next frame image B is D1, and a centroid distance between a near object b of the current frame image A and a near object b of the next frame image B is D2. Although the far object a and the near object b are both on the same image, the centroid distance D1 of the far object a is significantly smaller than the centroid distance D2 of the near object b. Therefore, according to the present application, the dynamic threshold is set for different object types to screen the target candidate box, thereby reducing the matching computation amount and improving the matching accuracy of the candidate boxes.

In some embodiments, the step S103 includes: screening, for each object detection box, at least one target candidate box corresponding to the object detection box from the plurality of candidate boxes by using a preset dynamic threshold of a centroid distance; and calculating a multi-dimensional similarity between each object detection box and the target candidate box on the basis of the second position coordinates and the third position coordinates.

In the present embodiment, optionally, the step of screening the target candidate box includes: calculating a first centroid distance between each object detection box and the object tracking device, and second centroid distances between each object detection box and the plurality of candidate boxes, on the basis of first centroid world coordinates of the object detection box and second centroid pixel coordinates of the candidate boxes; and determining a dynamic threshold corresponding to the first centroid distance on the basis of a preset dynamic threshold table of centroid distances.

The preset dynamic threshold table of the centroid distances further includes: performing information annotation on historical training data, including position information, category information, etc. of the object detection box; and calculating a centroid distance for each pair of annotated object detection boxes. Preferably, the centroid distance may be calculated using a Euclidean distance or other distance measures.

The distribution of the centroid distances is counted, and similarity thresholds are divided to generate the dynamic threshold table of the centroid distances. In the course of dividing the similarity thresholds, the similarity thresholds may also be adjusted according to the actual needs, thereby ensuring that different objects can be accurately distinguished in the object detection process.

The dynamic threshold table of the centroid distances is dynamically validated and tuned according to the object detection box acquired each time. For example, in the process of dynamic validation, erroneous judgments are recorded, i.e., different objects are treated as the same object or the same object is treated as different objects. In the case of erroneous judgment, the thresholds in the dynamic threshold table of the centroid distances are dynamically adjusted, such that the system can distinguish the objects in subsequent detection more accurately. The results of each dynamic tuning are fed back to an object detection system to update system parameters or algorithms, thereby improving the robustness and accuracy of the system. By continuously monitoring the performances of the object detection system and evaluating the system regularly, according to the evaluation results, an update strategy of the dynamic threshold table of the centroid distances is further optimized to ensure that the system can work effectively under different scenarios and data. The dynamic threshold table of the centroid distances is dynamically validated and tuned according to the object detection box acquired each time, thereby improving the performance and effect of the object detection system.

For each object detection box, target candidate boxes having a second centroid distance from the object detection box being greater than the dynamic threshold are screened, each object detection box corresponding to at least one of the target candidate boxes.

In the present optional embodiment, the first centroid distance between the object detection box and the object tracking device is calculated through the first centroid world coordinates and the world coordinates of the object tracking device so as to determine whether the object detection box is a far object or a near object, and determine a corresponding dynamic threshold through the first centroid distance. The dynamic threshold is used for screening the candidate boxes of the object detection box, thereby screening at least one target candidate box corresponding to the object detection box and effectively excluding other candidate boxes that obviously do not meet candidate box conditions of the object detection box. Therefore, the amount of computation in the subsequent similarity calculation process and matching process is reduced, and the interference from invalid candidate boxes in the matching process is reduced, and the object tracking accuracy is improved. For example, for the dynamic threshold table of the centroid distances, as shown in FIG. 2, a schematic diagram of a relationship of the dynamic thresholds of the centroid distances is shown in FIG. 2. This schematic diagram is used for representing the dynamic threshold table of the centroid distances. When the first centroid distance (object world distance) is 3 meters, the dynamic threshold is 3; and when the first centroid distance (object world distance) is 15 meters, the dynamic threshold is 3.

Optionally, the step of calculating the multi-dimensional similarity includes: calculating a detection box centroid offset (box_IOU) similarity between each object detection box and the target candidate box on the basis of third centroid pixel coordinates of the object detection box and second centroid pixel coordinates of the candidate boxes; calculating a detection box shape change (box_SHAPE) similarity and a detection box area (box_AREA) similarity between each object detection box and the target candidate box on the basis of third frame pixel coordinates of the object detection box and second frame pixel coordinates of the candidate boxes; and calculating a world coordinate offset similarity between each object detection box and the target candidate box on the basis of third world coordinates of the object detection box and second world coordinates of the candidate boxes.

Specifically, the calculating the multi-dimensional similarity between each object detection box and the target candidate box further includes: performing calculation by using a multi-dimensional similarity weighting model. Wherein the multi-dimensional similarity weighting model at least includes: a distance measurement algorithm, such as a Euclidean distance, a Manhattan distance, etc., which is used to calculate a spatial distance between the object detection box and the target candidate box; an edge feature matching algorithm, such as Canny edge detection, which is used to, by extracting edge features of the object detection box and the target candidate box, calculate an edge feature similarity therebetween by using appropriate matching algorithms, such as feature point matching and edge line matching; and a structural similarity index algorithm, which is used to evaluate the overall similarity by comparing the brightness, contrast, and structural similarity of two images.

For each object detection box, the detection box centroid offset similarity, the detection box shape change similarity, the detection box area similarity and the world coordinate offset similarity are weighted to obtain the multi-dimensional similarity.

In the present optional embodiment, the coordinate parameters of each candidate box are optionally divided by the coordinate parameters of the object detection box to obtain the similarity parameter.

Step S104: output an object tracking result at the next moment by using a preset matching algorithm according to the multi-dimensional similarities.

In this step, the object detection box in the next frame image corresponding to the current object detection box is hardly determined because there may be a plurality of object detection boxes in two consecutive frame images. For example, there are 20 object detection boxes on both consecutive images A and B. With respect to the second position coordinates that are predicted based on an object detection box a on the image A, which object detection box in the image B at the next moment corresponding to the second position coordinates is hardly determined directly. Therefore, corresponding relationships between the plurality of object detection boxes of the current frame image and the plurality of candidate boxes of the next frame image are matched through a preset matching algorithm in the present application.

In some embodiments, the step S104 includes: matching a final target candidate box corresponding to each object detection box at the next moment by using a Hungary matching algorithm according to the multi-dimensional similarities between each object detection box and the plurality of candidate boxes; and outputting the final target candidate box as the object tracking result.

In the present embodiment, all multi-dimensional similarities obtained in step S103 are input into the Hungary matching algorithm, and each object detection box and each candidate box are traversed to obtain the candidate box corresponding to each object detection box.

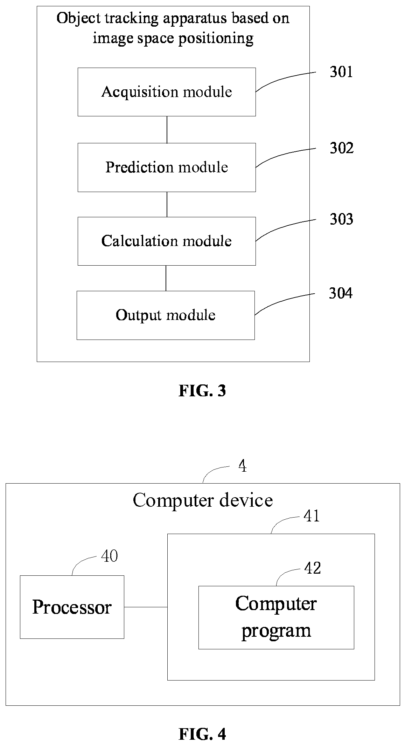

The object tracking method based on image space positioning corresponding to the above method embodiment is performed to achieve the corresponding functions and technical effects. Referring to FIG. 3, FIG. 3 is a schematic structural diagram of an object tracking apparatus based on image space positioning provided by an embodiment of the present application. For ease of description, only the parts related to the present embodiment are shown. The object tracking apparatus based on image space positioning provided by the embodiment of the present application includes: an acquisition module 301, configured to acquire first position coordinates of a plurality of object detection boxes at a current moment, the first position coordinates including first pixel coordinates and first world coordinates; a prediction module 302, configured to predict second position coordinates of a candidate box of each object detection box at the next moment on the basis of the first position coordinates; a calculation module 303, configured to calculate multi-dimensional similarities between each object detection box and the plurality of candidate boxes on the basis of the second position coordinates and third position coordinates of the object detection box at the next moment, the multi-dimensional similarities including a multi-dimensional similarity determined on the basis of a dynamic threshold of a centroid distance, and the third position coordinates being actual measured position coordinates; and an outputting module 304, configured to output an object tracking result at the next moment by using a preset matching algorithm according to the multi-dimensional similarities.

In some embodiments, the calculation module 303 includes: a screening module, configured to screen, for each object detection box, at least one target candidate box corresponding to the object detection box from the plurality of candidate boxes by using a preset dynamic threshold of the centroid distance; and a calculation module, configured to calculate a multi-dimensional similarity between each object detection box and the target candidate box on the basis of the second position coordinates and the third position coordinates.

In some embodiments, the screening module is specifically configured to: calculate a first centroid distance between each object detection box and an object tracking device, and second centroid distances between each object detection box and the plurality of candidate boxes, on the basis of first centroid world coordinates of the object detection box and second centroid pixel coordinates of the candidate boxes; determine a dynamic threshold corresponding to the first centroid distance on the basis of a preset dynamic threshold table of centroid distances; and screening, for each object detection box, target candidate boxes having a second centroid distance from the object detection box being greater than the dynamic threshold, each object detection box corresponding to at least one of the target candidate boxes.

In some embodiments, the calculation module is specifically configured to: calculate a detection box centroid offset similarity between each object detection box and the target candidate box on the basis of third centroid pixel coordinates of the object detection box and second centroid pixel coordinates of the candidate boxes; calculate a detection box shape change similarity and a detection box area similarity between each object detection box and the target candidate box on the basis of third frame pixel coordinates of the object detection box and second frame pixel coordinates of the candidate boxes; and calculate a world coordinate offset similarity between each object detection box and the target candidate box on the basis of third world coordinates of the object detection box and second world coordinates of the candidate boxes; and weight, for each object detection box, the detection box centroid offset similarity, the detection box shape change similarity, the detection box area similarity and the world coordinate offset similarity to obtain the multi-dimensional similarity.

In some embodiments, the acquisition module 301 is specifically configured to: acquire first pixel coordinates of the plurality of object detection boxes at the current moment; generate, for each object detection box, object grounding point coordinates of the object detection box on the basis of the first pixel coordinates; and calculate space coordinates of the object grounding point coordinates in a world space on the basis of calibrated intrinsic parameters and calibrated extrinsic parameters of the object tracking device, wherein the space coordinates are first world coordinates of the object detection boxes at the current moment.

In some embodiments, the prediction module 302 is specifically configured to: predict, for each object detection box, second position coordinates of the candidate box of the object detection box at the next moment by using a Kalman filtering algorithm according to the first position coordinates of the object detection box at the current moment and fourth position coordinates at the previous moment.

In some embodiments, the output module 304 is specifically configured to: match a final target candidate box corresponding to each object detection box at the next moment by using a Hungary matching algorithm according to the multi-dimensional similarities between each object detection box and the plurality of candidate boxes; and output the final target candidate box as the object tracking result.

The above-mentioned object tracking apparatus based on image space positioning can implement the object tracking method based on image space positioning in the method embodiment. The options in the above method embodiment are also applicable to the present embodiment, and are not described in detail herein. The rest of the embodiments of the present application may refer to the content of the above-mentioned method embodiment, and will not be repeated in the present embodiment.

FIG. 4 is a schematic structural diagram of a computer device provided by an embodiment of the present application. As shown in FIG. 4, the terminal device 4 of this embodiment includes at least one processor 40 (only one shown in FIG. 4), a memory 41, and a computer program 42 which is stored in the memory 41 and may run on the at least one processor 40. The processor 40 implements the steps in any of the method embodiments while executing the computer program 42.

The computer device 4 may be a computing device such as a vehicle-mounted terminal, a smart phone, a tablet computer, a desktop computer and a cloud server. The computer device may include, but is not limited to, a processor 40 and a memory 41. Those skilled in the art may understand that FIG. 4 is only an example of the computer device 4, without constituting a limitation on the computer device 4, and may include more or fewer components than shown, or a combination of certain components or different components. For example, the computer device may further include an input/output device, a network access device, etc.

The processor 40 may be a central processing unit (CPU), a universal processor, a digital signal processor (DSP), an application specific integrated circuit (ASIC), a field-programmable gate array (FPGA), or other programmable logic devices, discrete gates or transistor logic devices, discrete hardware components, or the like. The universal processor may be a microprocessor, or any conventional processor.

In some embodiments, the memory 41 may be an internal storage unit of the computer device 4, such as a hard disk or memory of the computer device 4. In other embodiments, the memory 41 may also be an external storage device of the computer device 4, such as a pluggable hard disk, a smart memory card (SMC), a secure digital (SD) card or a flash card equipped on the computer device 4. Further, the memory 41 may also include both an internal storage unit and an external storage device of the computer device 4. The memory 41 is configured to store an operating system, applications, boot loader, data, and other programs, such as program codes of computer programs. The memory 41 may also be configured to temporarily store data that has been or will be output.

In addition, an embodiment of the present application further provides a computer-readable storage medium configured to store a computer program therein, the computer program being executed by a processor to implement the steps of any method embodiment.

An embodiment of the present application provides a computer program product. The computer program product, when being operated on a computer device, causes the computer device to execute the steps in the above method embodiments.

In several embodiments provided by the present application, each box in the flowchart or block diagram may represent a module, a program segment, or part of code, wherein the module, program segment, or part of code contains one or more executable instructions for implementing a specified logical function. It should also be noted that in some alternative implementations, the functions indicated in the boxes may also occur in a different order than those indicated in the drawings. For example, two boxes represented consecutively may actually be performed in substantially parallel, and they may sometimes be performed in a reverse order, depending on the functionality involved.

The functions, if implemented in the form of a software functional unit and sold or used as a separate product, may be stored in a computer-readable storage medium. Based on this understanding, the technical solutions of the present application in essence (or parts contributed to the prior art) or part of the technical solutions may be embodied in the form of a software product. This computer software product is stored in a storage medium including a plurality of instructions causing a computer device to perform all or part of the steps of the methods in respective embodiments of the present application. The aforementioned storage media include: a U disk, a portable hard disk, a read-only memory (ROM), a random access memory (RAM), a magnetic disk or an optical disc or other media that can store program codes therein.

The objectives, technical solutions and beneficial effects of the present application are further detailed in the above-mentioned specific embodiments. It should be understood that the above is only a specific embodiment of the present application and is not used to limit the protection scope of the present application. It should be particularly pointed out that any modification, equivalent replacement, improvement and so on made within the spirit and principle of the present application shall be encompassed by the protection scope of the present invention.

**Claims**

1. An object tracking method based on image space positioning, **characterized by** comprising:

   acquiring first position coordinates of a plurality of object detection boxes at a current moment, the first position coordinates comprising first pixel coordinates and first world coordinates;

predicting second position coordinates of a candidate box of each object detection box at the next moment on the basis of the first position coordinates;

calculating multi-dimensional similarities between each object detection box and a plurality of candidate boxes on the basis of the second position coordinates and third position coordinates of the object detection box at the next moment, the multi-dimensional similarities comprising a multi-dimensional similarity determined on the basis of a dynamic threshold of a centroid distance, and the third position coordinates being actual measured position coordinates; and

outputting an object tracking result at the next moment by using a preset matching algorithm according to the multi-dimensional similarities.

2. The object tracking method based on image space positioning according to claim 1, **characterized in that** the calculating multi-dimensional similarities between each object detection box and a plurality of candidate boxes on the basis of the second position coordinates and third position coordinates of the object detection box at the next moment comprises:

screening, for each object detection box, at least one target candidate box corresponding to the object detection box from the plurality of candidate boxes by using a preset dynamic threshold of a centroid distance; and calculating a multi-dimensional similarity between each object detection box and the target candidate box on the basis of the second position coordinates and the third position coordinates.

3. The object tracking method based on image space positioning according to claim 2, **characterized in that** the screening, for each object detection box, at least one target candidate box corresponding to the object detection box from the plurality of candidate boxes by using a preset dynamic threshold of a centroid distance comprises:

calculating a first centroid distance between each object detection box and an object tracking device, and second centroid distances between each object detection box and the plurality of candidate boxes, on the basis of first centroid world coordinates of the object detection box and second centroid pixel coordinates of the candidate boxes;

determining a dynamic threshold corresponding to the first centroid distance on the basis of a preset dynamic threshold table of centroid distances; and

screening, for each object detection box, target candidate boxes having a second centroid distance from the object detection box being greater than the dynamic threshold, each object detection box corresponding to at least one of the target candidate boxes.

4. The object tracking method based on image space positioning according to claim 3, **characterized in that** the preset dynamic threshold table of the centroid distances further comprises:

performing information annotation on historical training data, and calculating a centroid distance for each pair of annotated object detection boxes;

counting the distribution of the centroid distances, and dividing similarity thresholds to generate the dynamic threshold table of the centroid distances; and

dynamically validating and tuning the dynamic threshold table of the centroid distances according to the object detection box acquired each time.

5. The object tracking method based on image space positioning according to claim 2, **characterized in that** the calculating the multi-dimensional similarities between each object detection box and the target candidate boxes on the basis of the second position coordinates and the third position coordinates comprises:
calculating a detection box centroid offset similarity between each object detection box and the target candidate box on the basis of third centroid pixel coordinates of the object detection box and second centroid pixel coordinates of the candidate boxes.

6. The object tracking method based on image space positioning according to claim 5, **characterized in that** the calculating the multi-dimensional similarity between each object detection box and the target candidate box on the basis of the second position coordinates and the third position coordinates comprises:
calculating a detection box shape change similarity and a detection box area similarity between each object detection box and the target candidate box on the basis of third frame pixel coordinates of the object detection box and second frame pixel coordinates of the candidate boxes.

**EP 4 535 295 A1**

7. The object tracking method based on image space positioning according to claim 6, **characterized in that** the calculating the multi-dimensional similarity between each object detection box and the target candidate box on the basis of the second position coordinates and the third position coordinates comprises:
calculating a world coordinate offset similarity between each object detection box and the target candidate box on the basis of third world coordinates of the object detection box and second world coordinates of the candidate boxes.

8. The object tracking method based on image space positioning according to claim 7, **characterized in that** the calculating the multi-dimensional similarity between each object detection box and the target candidate box further comprises:

    performing calculation by using a multi-dimensional similarity weighting model, wherein the multi-dimensional similarity weighting model at least comprises a distance measurement algorithm, an edge feature matching algorithm and a structural similarity index algorithm; and
    weighting, for each object detection box, the detection box centroid offset similarity, the detection box shape change similarity, the detection box area similarity and the world coordinate offset similarity to obtain the multi-dimensional similarity.

9. The object tracking method based on image space positioning according to claim 1, **characterized in that** the acquiring first position coordinates of a plurality of object detection boxes at a current moment comprises:

    acquiring first pixel coordinates of the plurality of object detection boxes at the current moment;
    generating, for each object detection box, object grounding point coordinates of the object detection box on the basis of the first pixel coordinates; and
    calculating space coordinates of the object grounding point coordinates in a world space on the basis of calibrated intrinsic parameters and calibrated extrinsic parameters of the object tracking device, wherein the space coordinates are first world coordinates of the object detection boxes at the current moment.

10. The object tracking method based on image space positioning according to claim 9, **characterized by** further comprising detecting the plurality of object detection boxes, which comprises:

    performing distortion correction on an image acquired by the object tracking device, performing object detection on the corrected image to generate the object detection boxes, and correcting the object detection boxes, wherein a deep learning algorithm is used for processing in the process of performing object detection on the corrected image.

11. The object tracking method based on image space positioning according to claim 1, **characterized in that** the predicting second position coordinates of a candidate box of each object detection box at the next moment on the basis of the first position coordinates comprises:
predicting, for each object detection box, the second position coordinates of the candidate box of the object detection box at the next moment by using a Kalman filtering algorithm according to the first position coordinates of the object detection box at the current moment and fourth position coordinates at the previous moment.

12. The object tracking method based on image space positioning according to claim 11, **characterized in that** the Kalman filtering algorithm further comprises:
tuning parameters of a state transition matrix and process noise according to motion data of the object detection box; and inputting the first position coordinates and the fourth position coordinates into a preset motion model for candidate box prediction at the next moment according to the tuned parameters, wherein the preset motion model adopts any one of a uniform velocity model, a random acceleration model, a steering model or a nonlinear module.

13. The object tracking method based on image space positioning according to claim 1, **characterized in that** the outputting an object tracking result at the next moment by using a preset matching algorithm according to the multi-dimensional similarities comprises:

    matching a final target candidate box corresponding to each object detection box at the next moment by using a Hungary matching algorithm according to the multi-dimensional similarities between each object detection box and the plurality of candidate boxes; and
    outputting the final target candidate box as the object tracking result.

11

14. An object tracking apparatus based on image space positioning, **characterized by** comprising:

an acquisition module, configured to acquire first position coordinates of a plurality of object detection boxes at a current moment, the first position coordinates comprising first pixel coordinates and first world coordinates;

a prediction module, configured to predict second position coordinates of a candidate box of each object detection box at the next moment on the basis of the first position coordinates;

a calculation module, configured to calculate multi-dimensional similarities between each object detection box and a plurality of candidate boxes on the basis of the second position coordinates and third position coordinates of each object detection box at the next moment, the multi-dimensional similarities comprising a multi-dimensional similarity determined on the basis of a dynamic threshold of a centroid distance, and the third position coordinates being actual measured position coordinates; and

an outputting module, configured to output an object tracking result at the next moment by using a preset matching algorithm according to the multi-dimensional similarities.

15. A computer device, **characterized by** comprising a processor and a memory, the memory being configured to store a computer program therein, the computer program being executed by the processor to implement the object tracking method based on image space positioning according to any one of claims 1 to 7.

S101

Acquire first position coordinates of a plurality of object detection boxes at a current moment, the first position coordinates including first pixel coordinates and first world coordinates

S102

Predict second position coordinates of a candidate box of each object detection box at the next moment on the basis of the first position coordinates

S103

Calculate multi-dimensional similarities between each object detection box and the plurality of candidate boxes on the basis of the second position coordinates and third position coordinates of the object detection box at the next moment, the multi-dimensional similarities including a multi-dimensional similarity determined on the basis of a dynamic threshold of a centroid distance, and the third position coordinates being actually measured position coordinates

S104

Output an object tracking result at the next moment by using a preset matching algorithm according to the multi-dimensional similarities

**FIG. 1**

Dynamic threshold

3

1

3          15          Object world distance (m)

**FIG. 2**

Object tracking apparatus based on
image space positioning

| Acquisition module | 301 |

| Prediction module | 302 |

| Calculation module | 303 |

| Output module | 304 |

**FIG. 3**

4

Computer device

41

Processor — 40

Computer
program — 42

**FIG. 4**

## INTERNATIONAL SEARCH REPORT

| | International application No. |
|---|---|
| | **PCT/CN2024/084929** |

**A. CLASSIFICATION OF SUBJECT MATTER**

G06V 10/74(2022.01)i

According to International Patent Classification (IPC) or to both national classification and IPC

**B. FIELDS SEARCHED**

Minimum documentation searched (classification system followed by classification symbols)

IPC:G06V,G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 目标, 追踪, 跟踪, 预测, 框, 多, 维度, 相似, 加权, 动态, 阈值, 距离, 质心, 匈牙利匹配, 卡尔曼滤波, object, track, predict, box, multi, dimensional, similar, weight, dynamic, threshold, distance, centroid, Hungarian match, Kalman filter

**C. DOCUMENTS CONSIDERED TO BE RELEVANT**

| Category* | Citation of document, with indication, where appropriate, of the relevant passages | Relevant to claim No. |
|---|---|---|
| PX | CN 116977671 A (HUIZHOU DESAY SV INTELLIGENT TRANSPORTATION TECHNOLOGY RESEARCH INSTITUTE CO., LTD.) 31 October 2023 (2023-10-31) claims 1-10 | 1-15 |
| Y | CN 115063454 A (ZHEJIANG SOTEREA TECHNOLOGY GROUP CO., LTD. et al.) 16 September 2022 (2022-09-16) abstract, description, paragraphs 4-9 and 13-62, and figures 1-2 | 1-2, 5-15 |
| Y | CN 110163068 A (TENCENT TECHNOLOGY (SHENZHEN) CO., LTD.) 23 August 2019 (2019-08-23) abstract, and description, paragraphs 47 and 67-75 | 1-2, 5-15 |
| A | CN 111667501 A (HANGZHOU HIKVISION DIGITAL TECHNOLOGY CO., LTD.) 15 September 2020 (2020-09-15) entire document | 1-15 |
| A | CN 113869422 A (BEIJING YIHANG INTELLIGENT TECHNOLOGY CO., LTD.) 31 December 2021 (2021-12-31) entire document | 1-15 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 June 2024** | **20 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| | INTERNATIONAL SEARCH REPORT | International application No. |
| --- | --- | --- |
| | | **PCT/CN2024/084929** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 115203888 A (JILUO TECHNOLOGY (SHANGHAI) CO., LTD.) 18 October 2022 (2022-10-18)<br>        entire document | 1-15 |
| A | US 2022383529 A1 (SAMSUNG ELECTRONICS CO., LTD.) 01 December 2022 (2022-12-01)<br>        entire document | 1-15 |

Form PCT/ISA/210 (second sheet) (July 2022)

**INTERNATIONAL SEARCH REPORT**
Information on patent family members

International application No.

**PCT/CN2024/084929**

| Patent document cited in search report | | | Publication date (day/month/year) | Patent family member(s) | | | Publication date (day/month/year) |
|---|---|---|---|---|---|---|---|
| CN | 116977671 | A | 31 October 2023 | None | | | |
| CN | 115063454 | A | 16 September 2022 | None | | | |
| CN | 110163068 | A | 23 August 2019 | None | | | |
| CN | 111667501 | A | 15 September 2020 | None | | | |
| CN | 113869422 | A | 31 December 2021 | None | | | |
| CN | 115203888 | A | 18 October 2022 | None | | | |
| US | 2022383529 | A1 | 01 December 2022 | KR | 20220160850 | A | 06 December 2022 |

Form PCT/ISA/210 (patent family annex) (July 2022)